# EUROPEAN PATENT SPECIFICATION

(11) **EP 1 405 440 B1**
(45) Date of publication and mention of the grant of the patent: **07.03.2007**
(21) Application number: 02735901.7
(22) Date of filing: 20.06.2002
(51) Int. Cl.: H04B 7/12

(54) **FREQUENCY OFFSET DIVERSITY RECEIVER**
FREQUENZVERSCHIEBUNGDIVERSITÄTSEMPFÄNGER
DISPOSITIF DE RECEPTION EN DIVERSITE A DECALAGE DE FREQUENCE

(30) Priority: 27.06.2001 GB 0115628; 05.12.2001 GB 0129077
(43) Date of publication of application: 07.04.2004
(73) Proprietor: Koninklijke Philips Electronics N.V., 5621 BA Eindhoven (NL)
(72) Inventor: FIFIELD, Robert, NL-5656 AA Eindhoven (NL); EVANS, David, H., NL-5656 AA Eindhoven (NL)
(74) Representative: Damen, Daniel Martijn
(86) International application number: PCT/IB2002/002410
(87) International publication number: WO 2003/003613

(56) References cited:
- WO-A-00/67343
- WO-A-01/69824
- US-A- 5 742 583
- US-B1- 6 172 970

## Description

### Technical Field

The present invention relates to a frequency offset diversity receiver and has particular, but not exclusive, application to multiple input multiple output (MIMO) systems, such as HIPERLAN 2 systems, and receiver systems using antenna diversity.

### Background Art

A frequency offset diversity receiver is known from IEEE Transactions on Vehicular Technology, Vol. VT-36, No. 2, May 1987, beginning at page 63, "Frequency Offset Receiver Diversity for Differential MSK" by Tatsuro Masamura. The described receiver diversity scheme is intended for the differential detection of MSK (Minimum Shift Keying) in a high quality mobile satellite communications system. The receiver comprises two receiving branches each having its own antenna. The signal from each receiving branch is translated to a different intermediate frequency (IF). The IF signals are summed and then detected by a common differential detector. The plurality of signals are combined at an IF stage without phase adjusters, signal quality measurement circuits or a switching controller. The IF signals differ in frequency by the carrier frequency offset *fₛ*. The frequency offset is chosen to be sufficiently large that any interference components in the products of mixing can be suppressed by a low pass filter following the differential detector. Each of the receiving branches effectively comprises two complete receiver chains which not only raises the component count and thereby the cost but also increases the power consumption which is undesirable in hand portable units.

US Patent Specification 5,742,583 relates to selection diversity and discloses a method of combining diverse spread spectrum antenna signals which avoids having to provide separate "backhaul cables" between each antenna and a respective port of a receiver. In one embodiment having two antennas, the frequency F₁ of a spread spectrum signal received at one of the two antennas is offset by a frequency +F₀. The non-offset and the offset signals are combined and applied to a single backhaul cable. At a base station the combined signal is split with one part being applied directly to a first receiver port whilst the other part is frequency shifted by -F₀ and the result is applied to a second receiver port. The non-offset antenna signal is received unchanged at the receiver and the offset antenna signal has the offset removed before being applied to the receiver. The offset frequency F₀ is selected to be as small as possible but large enough to maintain signal isolation. F₀ may be as small as 1/(2 x CPI) Hz, where CPI is the coherent processing interval of the spread spectrum signal. As an example, for a spreading bandwidth of 10MHz, the CPI is 5 microseconds and the value of F₀ is 100kHz.

In a second embodiment the antenna spread spectrum signals from spatially separate antennas are code division multiplexed prior to transmission on a single backhaul cable. At the base station the output from the backhaul cable is split and the respective parts are applied to correlators which despread and decode the respective antenna signals.

Apart from reducing the number of backhaul cables this known method does not reduce the number of RF chains in the base station receiver.

### Disclosure of Invention

An object of the present invention to reduce the component count in frequency offset diversity receivers.

According to the present invention there is provided a frequency offset diversity receiver comprising spatial antenna diversity means for picking-up respective ones of at least two modulated RF signals, the spatial antenna diversity means having a respective output for each of the at least two modulated RF input signals, RF signal combining means having signal inputs and an output, each of the signal inputs being coupled by a respective RF signal path to a respective output of the spatial antenna diversity means, RF frequency shifting means in all but one of the RF signal paths, and signal processing means coupled to the output of the RF signal combining means, characterised in that each of the frequency shifting means is adapted to shift the frequency of the RF signal in its respective path by at least one channel spacing into a respective frequency channel adjacent to a frequency channel occupied by the RF signal coupled to said one of the RF signal paths, in that the output signal from the RF signal combining means comprises a single multichannel RF signal, and in that the signal processing means comprises an intermediate frequency (IF) stage coupled to the output of the RF signal combining means for mixing the combined signals down to baseband, an analog-to-digital conversion (ADC) stage coupled to the IF stage to digitise the baseband signals, frequency demultiplexing means coupled to the ADC stage for recovering the respective baseband modulated signals and means for combining the baseband signals to provide an output signal.

Unlike the known type of receiver described above in the IEEE Transactions on Vehicular Technology article, the input signals are essentially at RF when they are combined thus avoiding a duplication of components in the RF section of the receiver and their attendant cost. Frequency down conversion to baseband is done in a common stage and thereafter the signals which have been digitised undergo frequency demultiplexing to recover the originally received signals which are subsequently combined.

### Brief Description of Drawings

The present invention will now be described, by way of example, with reference to the accompanying drawings, in which:
Figure 1 is a block schematic diagram of a frequency offset diversity receiver made in accordance with the present invention, and
Figure 2 is a block schematic diagram of a MIMO receiver.

In the drawings the same reference numerals have been used to refer to corresponding features.

### Modes for Carrying Out the Invention

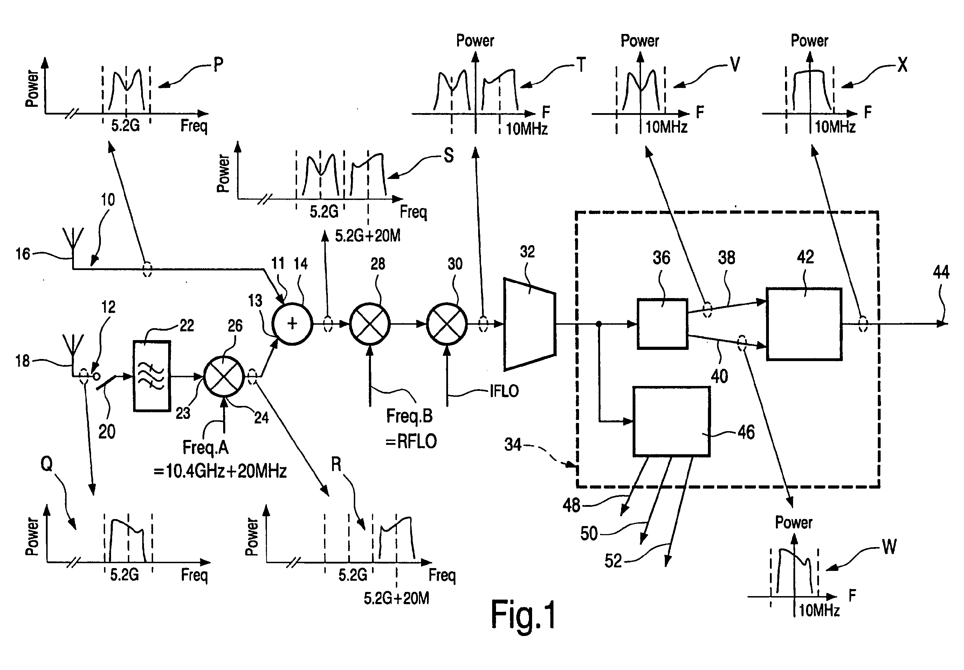

The receiver shown in Figure 1 comprises first and second RF receiving branches 10, 12 which are coupled to respective inputs 11, 13 of a combiner 14. The first receiving branch 10 comprises a first antenna 16 which is coupled to the input 11 of the combiner 14. The second branch 12 comprises a second antenna 18 which is spatially separated from the first antenna 16, and which is coupled by way of a switch 20 to a filter 22. An output of the filter 22 is coupled to a first input 23 of a mixer 26. A local oscillator signal having a frequency FREQ.A is supplied to an input 24 of the mixer 26 in order to shift the signal on the first input 23 to a frequency channel adjacent the channel occupied by the signal in the first receiving branch 10. An output of the mixer 26 is supplied to the input 13 of the combiner 14.

The combined signal output of the combiner 14 is frequency down-converted to baseband in two heterodyning stages which include a RF mixer 28, which receives a RF local oscillator frequency FREQ.B from a suitable source to frequency down-convert the combined RF signal to an IF, and an IF mixer 30, which receives an IF local oscillator frequency to frequency down-convert the IF signal on its other input to baseband.

Optionally a single mixer (not shown) may be substituted for the mixers 28 and 30 in which case its local oscillator frequency is selected to convert the combined RF signal to baseband.

An analogue to digital converter (ADC) 32 digitises the baseband signal from the mixer 30 and supplies it to a baseband processing stage 34. The stage 34 comprises a frequency demultiplexer 36 which recovers the respective original modulating signals received by the first and second branches 10, 12 and provides them on respective outputs 38, 40. The signal on the output 40 has had the frequency shift produced by the mixer 26 reversed. These outputs 38, 40 are coupled to a phase align and combine stage 42 which provides a single maximally combined signal on an output 44.

The baseband processing stage 34 includes a scan adjacent channel stage 46 which has an input coupled to the output of the ADC 32. The stage 46 has three outputs 48, 50 and 52. The output 48 is used for selectively operating the switch 20, the output 50 provides the frequency FREQ.A which is used to shift the frequency of the RF signal in the second receiving branch 12, and the output 52 provides the frequency FREQ.B to the local oscillator input of the RF mixer 28.

The operation of the illustrated receiver will now be described with the assistance of the inset waveform diagrams P, Q, R, S, T, V, W and X. In the diagrams the abscissa represents frequency and the ordinate represents power.

Diagram P illustrates a single channel signal received by the first antenna 16 and diagram Q illustrates a single channel signal received by the second antenna 18. Both the channels are centred on 5.2 GHz. Diagram R illustrates the signal which has been received by the second antenna 18 shifted in frequency by +20 MHz so as to lie in a channel adjacent to that occupied by the signal on the first antenna 16. The combined signal from the stage 14 is shown in diagram S which shows these signals located in adjacent frequency diversity channels.

Diagram T shows the combined signals frequency down-converted to baseband. Diagrams V and W show the respective outputs 38, 40 from the frequency demultiplexer 36. In the case of the diagram W, the signal has been shifted back in frequency and resembles that shown in the diagram Q. Finally diagram X shows the result of phase aligning and combining the signals shown in diagrams V and W into a single, largely undistorted pulse.

In a preferred mode of operation, both adjacent channels are empty in which case the switch 20 is closed and both signals are used. However if both of the adjacent channels are occupied, the receiver cannot operate with two frequency multiplexed signals and the switch 20 is opened so that the receiver operates as an ordinary receiver which may still employ antenna switching similar to a classic receiver with antenna diversity.

In the event of only one of the channels being occupied, the receiver may still employ frequency multiplexing but may need to adjust the frequencies FREQ.A and FREQ.B in order that the frequency multiplexed signal is not corrupted.

The illustrated receiver can investigate the status of the adjacent channels by baseband processing. In order to do this the switch 20 is opened and the signal strengths of the demultiplexed signals are compared. To investigate the other adjacent channel, the frequencies FREQ.A and FREQ.B will have to be adjusted.

In a non-illustrated variant of the receiver made in accordance with the present invention, the frequency multiplexing could be carried out at IF after the IF channel filter. This will ensure that adjacent channels would always be empty. This non-illustrated variant would require two RF to IF frequency down-converters but only one IF to baseband frequency down-converter.

The signal in the second receiving branch 12 may be shifted by more than one channel spacing. In such a case the IF stage and the ADC 32 will have to operate over a greater frequency range.

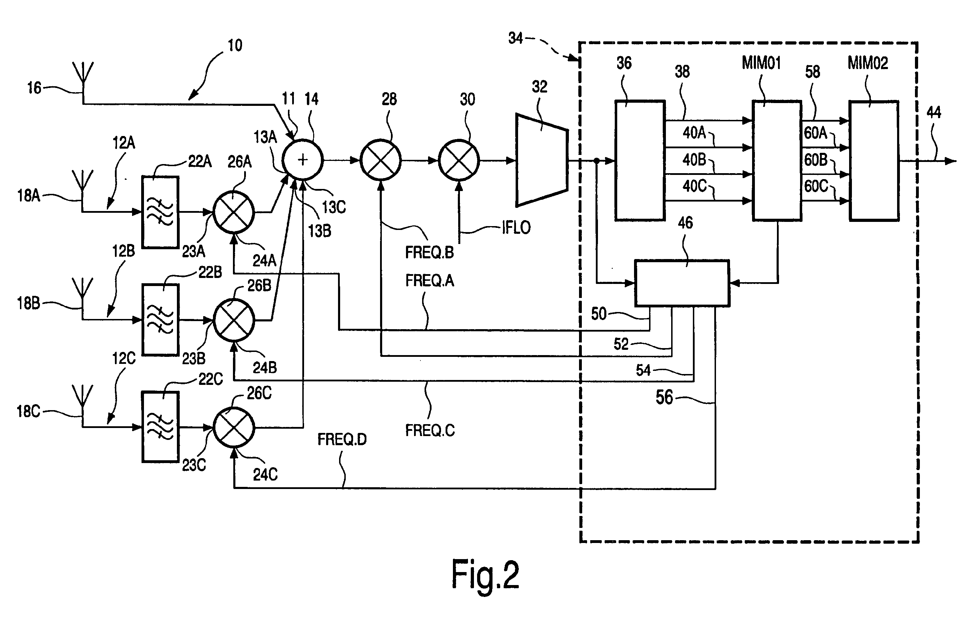

Figure 2 shows an embodiment of a frequency offset receiver for use in a MIMO system. The illustrated MIMO receiver is in many respects a simple extrapolation of the receiver shown in Figure 1 having more channels or branches. Although four receiving branches have been shown in Figure 2, the number is repeated to provide enough branches for the total number of MIMO branches.

The receiver shown in Figure 2 comprises four receiving branches (or channels) 10, 12A, 12B and 12C which are coupled to respective inputs 11, 13A, 13B and 13C of a combiner 14. A first of the receiving branches, branch 10, comprises a first antenna 16 which is coupled to the input 11 of the combiner 14. The architecture of the remaining three branches 12A, 12B and 12C is substantially the same and for convenience of description only the second branch 12A will be described. The corresponding features in the third and fourth branches 12B and 12C will referred to in parentheses.

The second branch 12A comprises an antenna 18A (18B, 18C) which is coupled to a filter 22A (22B, 22C). An output of the filter 22A (22B, 22C) is coupled to a first input 23A (23B, 23C) of a mixer 26A (26B, 26C). A local oscillator signal having a frequency FREQ.A (FREQ.C and FREQ.D) is supplied to an input 24A (24B, 24C) of the mixer 26A (26B, 26C) in order to shift the signal on the first input 23A (23B, 23C) to a frequency channel adjacent or close to the channel occupied by the signal in the first receiving branch 10. An output of the mixer 26A (26B, 26C) is coupled to a respective input 13A (13B, 13C) of the combiner 14. By way of example the first channel 10 has a centre frequency of 5.2 GHz and the respective local oscillator signals applied to the inputs 24A, 24B and 24C of the mixers 26A, 26B, 26C are such that the respective signals applied to the inputs 13A, 13B and 13C of the combiner 14 are [5.25GHz+(1 x 20 MHz)], [5.2GHz+(2 x 20MHz)] and [5.2GHz - (1 x 20MHz)].

The combined signal output of the combiner 14 comprising signals in four adjacent frequency channels is frequency down-converted to baseband in two heterodyning stages which include a RF mixer 28 which receives a RF local oscillator frequency FREQ.B from a suitable source for frequency down-converting the combined RF signal to an IF and an IF mixer 30 which receives an IF local oscillator frequency for frequency down-converting the IF signal on its other input to baseband.

Optionally a single mixer (not shown) may be substituted for the mixers 28 and 30 in which case its local oscillator frequency is selected to convert the combined RF signal to baseband.

An analogue to digital converter (ADC) 32 digitises the baseband signal from the mixer 30 and supplies it to a baseband processing stage 34. The stage 34 comprises a frequency demultiplexer 36 which recovers the respective original modulating signals received by the four branches 10, 12A, 12B and 12C and provides them on respective outputs 38, 40A, 40B and 40C. The signals on the outputs 40A, 40B and 40C have had the frequency shifts produced by the mixers 26A, 26B and 26C reversed. These outputs 38, 40A, 40B and 40C are coupled to a first MIMO stage MIMO1. The MIMO1 stage is capable of carrying out some or all of the following elements or functions:
(a) Radio channel estimation (to determine the coefficients of the M by N matrix that represents the performance of the channel where M is the number of transmitters and N is the number of receivers. This can be achieved by the use of either training sequences or coding techniques.).
(b) Radio channel matrix inversion.
(c) Capacity estimation.
(d) Nulling or beam forming.
(e) Interference cancellation.
(f) Maximising SNR.
(g) Error detection and correction.

Outputs 58, 60A, 60B and 60C of the MIMO1 stage are coupled to respective inputs of a second MIMO stage MIMO2 which is a multiplexer for recombining the individual data streams into a common stream which is supplied on an output 44.

The baseband processing stage 34 includes a scan adjacent channel stage 46 which has an input coupled to the output of the ADC 32. The stage 46 has four outputs 50, 52, 54 and 56. The output 50 provides the frequency FREQ.A which is used to shift the frequency of the RF signal in the second receiving branch 12A, the output 52 provides the frequency FREQ.B to the local oscillator input of the RF mixer 28, and the outputs 54, 56 respectively provide FREQ.C and FREQ.D for shifting the frequencies of the RF signals in the third and fourth receiving branches 128, 12C.

Comparing Figures 1 and 2 it will be noted that Figure 2 there are no switches in the branches 12A, 12B and 12C because the multi-branch structure of MIMO must be available at all times for MIMO to operate. Nevertheless there may be occasions when some of the adjacent channels are occupied and the transmitter needs to be informed. This can be done by way of a reverse channel and the transmitter can in response limit the degree of MIMO increase which it is using.

In the present specification and claims the word "a" or "an" preceding an element does not exclude the presence of a plurality of such elements. Further, the word "comprising" does not exclude the presence of other elements or steps than those listed.

### Industrial Applicability

Radio receiving apparatus.

## Claims

1. A frequency offset diversity receiver comprising spatial antenna diversity means (16,18 or 16, 18A, 18B, 18C) for picking-up respective ones of at least two modulated RF signals, the spatial antenna diversity means having a respective output (10, 12 or 10, 12A, 12B, 12C) for each of the at least two modulated RF input signals, RF signal combining means (14) having signal inputs (11, 13 or 11, 13A, 13B, 13C) and an output, each of the signal inputs being coupled by a respective RF signal path to a respective output of the spatial antenna diversity means, RF frequency shifting means (22, 26 or 22A, 26A, 22B, 26B, 22C, 26C) in all but one of the RF signal paths, and signal processing means coupled to the output of the RF signal combining means, **characterised in that** each of the frequency shifting means is adapted to shift the frequency of the RF signal in its respective path by at least one channel spacing into a respective frequency channel adjacent to a frequency channel occupied by the RF signal coupled to said one of the RF signal paths, **in that** the output signal from the RF signal combining means comprises a single multichannel RF signal, and **in that** the signal processing means comprises an intermediate frequency (IF) stage (28, 30) coupled to the output of the RF signal combining means for mixing the combined signals down to baseband, an analog-to-digital conversion (ADC) stage (32) coupled to the IF stage to digitise the baseband signals, frequency demultiplexing means (36) coupled to the ADC stage for recovering the respective baseband modulated signals and means (42) for combining the baseband signals to provide an output signal.

2. A receiver as claimed in claim 1, **characterised in that** the means for combining the baseband signals includes phase aligning means.

3. A receiver as claimed in claim 1, for use in a MIMO system in which the modulated RF signals comprise data streams, **characterised in that** the frequency demultiplexing means has an output (38, 40A, 40B, 40C) for each of the respective baseband modulated signals, **in that** a MIMO stage (MIMO1) is provided, the MIMO stage having a plurality of inputs coupled to respective outputs of the frequency demultiplexing means and a plurality of outputs for data streams and **in that** means (MIMO2) are provided for multiplexing data streams on the outputs of the MIMO stage into a common data stream.

4. A receiver as claimed in claim 1, **characterised by** switching means (20) coupled in each of the RF signal paths comprising the RF frequency shifting means and means responsive to detecting that at least two adjacent frequency channels are already in use, for operating the switching means to interrupt the RF signal path.

5. A receiver as claimed in claim 1, **characterised by** means for detecting the status of the adjacent frequency channels, said means causing the RF frequency shifting means and the IF stage to adjust their frequencies to avoid corruption of the single multichannel RF signal.

## Patentansprüche

1. Frequenzversatzdiversitätsempfänger, der räumliche Antennendiversitätsmittel (16, 18 oder 16, 18A, 18B, 18C) zum Aufnehmen jeweiliger von mindestens zwei modulierten HF-Signalen, wobei die räumlichen Antennendiversitätsmittel einen jeweiligen Ausgang (10, 12 oder 10, 12A, 12B, 12C) für jedes der mindestens zwei modulierten HF-Eingangssignale aufweisen, ein HF-Signalkombiniermittel (14), das Signaleingänge (11, 13 oder 11, 13A, 13B, 13C) und einen Ausgang aufweist, wobei jeder der Signaleingänge durch einen jeweiligen HF-Signalweg mit einem jeweiligen Ausgang der räumlichen Antennendiversitätsmittel gekoppelt ist, HF-Frequenzverschiebungsmittel (22, 26 oder 22A, 26A, 22B, 26B, 22C, 26C) in allen außer einem der HF-Signalwege und ein Signalverarbeitungsmittel umfasst, das mit dem Ausgang des HF-Signalkombiniermittels gekoppelt ist, **dadurch gekennzeichnet, dass** jedes der Frequenzverschiebungsmittel ausgelegt ist, um die Frequenz des HF-Signals in seinem jeweiligen Weg um mindestens einen Kanalabstand in einen jeweiligen Frequenzkanal zu verschieben, der einem Frequenzkanal benachbart ist, der durch das HF-Signal belegt ist, das mit dem einen der HF-Signalwege gekoppelt ist, **dadurch**, dass das Ausgangssignal vom HF-Signalkombiniermittel ein einzelnes Mehrkanal-HF-Signal umfasst, und **dadurch**, dass das Signalverarbeitungsmittel eine Zwischenfrequenzstufe (ZF-Stufe) (28, 30), die mit dem Ausgang des HF-Signalkombiniermittels zum Mischen des kombinierten Signals abwärts zum Basisband gekoppelt ist, eine Analog-Digital-Wandlerstufe (AD-Wandlerstufe) (32), die mit der ZF-Stufe gekoppelt ist, um die Basisbandsignale zu digitalisieren, ein Frequenzdemultiplexmittel (36), das mit der Analog-Digital-Wandlerstufe gekoppelt ist, zum Wiederherstellen der jeweiligen modulierten Basisbandsignale und ein Mittel (42) zum Kombinieren der Basisbandsignale umfasst, um ein Ausgangssignal bereitzustellen.

2. Empfänger nach Anspruch 1, **dadurch gekennzeichnet, dass** das Mittel zum Kombinieren der Basisbandsignale Phasenausrichtmittel beinhaltet.

3. Empfänger nach Anspruch 1 zur Verwendung in einem MIMO-System, in dem die modulierten HF-Signale Datenströme umfassen, **dadurch gekennzeichnet, dass** das Frequenzdemultiplexmittel einen Ausgang (38, 40A, 40B, 40C) für jedes der jeweiligen modulierten Basisbandsignale aufweist, **dadurch**, dass eine MIMO-Stufe (MIMO1) bereitgestellt ist, wobei die MIMO-Stufe mehrere Eingänge, die mit jeweiligen Ausgängen des Frequenzdemultiplexmittels gekoppelt sind, und mehrere Ausgänge für Datenströme aufweist, und **dadurch**, dass Mittel (MIMO2) zum Multiplexen von Datenströmen auf den Ausgängen der MIMO-Stufe in einen gemeinsamen Datenstrom bereitgestellt sind.

4. Empfänger nach Anspruch 1, **gekennzeichnet durch** Schaltmittel (20), die in jedem der HF-Signalwege eingekoppelt sind, die die HF-Frequenzverschiebungsmittel und Mittel, die auf das Detektieren reagieren, dass mindestens zwei benachbarte Frequenzkanäle bereits in Benutzung sind, zum Betätigen der Schaltmittel umfassen, um den HF-Signalweg zu unterbrechen.

5. Empfänger nach Anspruch 1, **gekennzeichnet durch** Mittel zum Detektieren des Zustands der benachbarten Frequenzkanäle, wobei die Mittel die HF-Frequenzverschiebungsmittel und die ZF-Stufe veranlassen, ihre Frequenzen zu justieren, um Beschädigung des einzelnen Mehrkanal-HF-Signals zu vermeiden.

## Revendications

1. Récepteur de diversité à décalage de fréquence comprenant un moyen de diversité spatiale d'antenne (16, 18 ou 16, 18A, 18B, 18C) pour capter certains, respectifs, d'au moins deux signaux RF modulés, le moyen de diversité spatiale d'antenne ayant une sortie respective (10, 12 ou 10, 12A, 12B, 12C) pour chacun des au moins deux signaux d'entrée RF modulés, un moyen de combinaison de signaux RF (14) ayant des entrées de signaux (11, 13 ou 11, 13A, 13B, 13C) et une sortie, chacune des entrées de signaux étant reliée à un trajet de signal RF respectif allant vers une sortie respective du moyen de diversité spatiale d'antenne, un moyen de décalage de fréquence RF (22, 26, ou 22A, 26A, 22B, 26B, 22C, 26C) dans la totalité des trajets de signaux RF sauf un, et un moyen de traitement du signal relié à la sortie du moyen de combinaison de signaux RF, **caractérisé en ce que** chacun des moyens de décalage de fréquence est apte à décaler la fréquence du signal RF sur son trajet respectif d'au moins un espacement entre canaux vers un canal de fréquence respectif adjacent ou vers un canal de fréquence occupé par le signal RF appliqué audit un des trajets de signaux RF, **en ce que** le signal de sortie du moyen de combinaison de signaux RF comprend un signal RF multicanal unique, et **en ce que** le moyen de traitement du signal comprend un étage à fréquence intermédiaire (FI) (28, 30) relié à la sortie du moyen de combinaison de signaux RF pour mélanger les signaux combinés afin de les abaisser en bande de base, un étage (32) de conversion analogique-numérique (CAN) relié à l'étage FI pour numériser les signaux en bande de base, un moyen de démultiplexage en fréquence (36) relié à l'étage CAN pour récupérer les signaux modulés en bande de base respectifs et un moyen (42) pour combiner les signaux en bande de base afin de fournir un signal de sortie.

2. Récepteur selon la revendication 1, **caractérisé en ce que** le moyen de combinaison des signaux en bande de base comprend un moyen d'alignement de phase.

3. Récepteur selon la revendication 1, pouvant être utilisé dans un système MIMO (entrées multiples, sorties multiples) dans lequel les signaux RF modulés comprennent des flux de données, **caractérisé en ce que** le moyen de démultiplexage en fréquence a une sortie (38, 40A, 40B, 40C) pour chacun des signaux modulés en bande de base respectifs, **en ce qu'**un étage MIMO (MIMO1) est prévu, l'étage MIMO ayant une pluralité d'entrées reliées à des sorties respectives du moyen de démultiplexage en fréquence et une pluralité de sorties pour des flux de données et **en ce que** des moyens (MIM02) sont prévus pour multiplexer des flux de données sur les sorties de l'étage MIMO sous la forme d'un flux de données commun.

4. Récepteur selon la revendication 1, **caractérisé par** des moyens de commutation (20) reliés à chacun des trajets de signaux RF, comprenant le moyen de décalage en fréquence RF et un moyen sensible à la détection du fait qu'au moins deux canaux de fréquence adjacents sont déjà utilisés, pour faire fonctionner le moyen de commutation afin d'interrompre le trajet de signal RF.

5. Récepteur selon la revendication 1, **caractérisé par** un moyen pour détecter l'état des canaux de fréquence adjacents, ledit moyen faisant en sorte que le moyen de décalage en fréquence RF et l'étage FI ajustent leurs fréquences pour éviter une perturbation du signal RF multicanal unique.
